(19) Europäisches Patentamt
European Patent Office
Office européen des brevets

(11) **EP 2 500 716 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(51) Int Cl.:
**G01N 21/88** *(2006.01)*   **G01N 21/89** *(2006.01)*
**G02B 13/22** *(2006.01)*   **G02B 5/10** *(2006.01)*

(21) Anmeldenummer: **12159712.4**

(22) Anmeldetag: **15.03.2012**

(54) **Vorrichtung zur optischen Erfassung von Prüfobjekten**

Device for optical detection of test objects

Dispositif de détection optique d'objets de test

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2011 DE 102011001289**

(43) Veröffentlichungstag der Anmeldung:
**19.09.2012 Patentblatt 2012/38**

(73) Patentinhaber: **Alfavision GmbH & Co. KG**
**94116 Hutthurm (DE)**

(72) Erfinder: **Donner, Klaus**
**94121 Salzweg (DE)**

(74) Vertreter: **Gustorf, Gerhard**
**Bachstraße 6a**
**84036 Landshut (DE)**

(56) Entgegenhaltungen:
EP-A1- 0 047 936      EP-A1- 0 063 761
US-A1- 2003 099 022     US-A1- 2004 212 797
US-A1- 2009 284 754

**Beschreibung**

Die Erfindung betrifft eine Vorrichtung zur optischen Erfassung von Prüfobjekten nach dem Oberbegriff des Patentanspruchs 1.

In der industriellen Fertigung sind immer häufiger lückenlose 100%-Kontrollen der Produkte erforderlich. Damit kann die Qualitätssicherung nicht mehr in Stichproben in einem Prüflabor durchgeführt werden, sondern muss in die Fertigungslinie integriert werden (Inline-Qualitätssicherung). Hierfür werden vorrangig scannende optische Prüfverfahren eingesetzt, für die Zeilenkameras, andere zeilenweise Bildaufnehmer (etwa Contact-Image-Sensoren oder photosensitive Zeilendetektoren) oder CMOS-Matrixkameras mit Einschränkung auf wenige aktive Zeilen mit hoher Taktrate und Auflösung verwendet werden. Solche Bildaufnehmer werden im Folgenden der Einfachheit halber als "Zeilensensor" bezeichnet.

Mit Hilfe eines Zeilensensors und einer üblichen abbildenden Vorsatzoptik können bewegte Objekte auf Fördervorrichtungen (etwa auf Förderbändern oder Rollenförderern), aber auch Endlos-Material wie Papieroder Textilbahnen, Metallbänder und Kunststofffolien kontinuierlich optisch abgetastet werden.

Dazu werden spezielle Spiegel (in Kombination mit angepassten Objektiven der Zeilenkameras) eingesetzt, deren Funktion im Weiteren erläutert wird. Die Verwendung von Spiegeln oder Spiegelsystemen ist in der Optik bekannt, jedoch nicht zur Erzeugung telezentrischer Abbildungssysteme für Zeilenkameras.

Gegenstand der DE 35 34 019 C2 ist eine Vorrichtung zur optischen Feststellung von Fehlern in einer Materialbahn. Hierzu werden ganze Kaskaden von planaren Umlenkspiegeln im Strahlengang einer Zeilenkamera verwendet, um den optischen Weg zu falten (so genannte Faltspiegelsysteme), ohne dass dadurch eine Telezentrie der Abbildung erreicht wird. Die optische Abbildung bleibt dabei perspektivisch. Nur das eingekoppelte Licht wird mit spezieller Lichteinkopplung parallelisiert. Der zur Parallelisierung des Lichts verwendete Spiegel ist ein Hohlspiegel, der für eine wirkliche Parallelisierung parabolisch gekrümmt sein müsste. Zusätzlich muss eine Reihe weiterer optischer Elemente (halbdurchlässige Spiegel, Kollimatoren etc.) eingesetzt werden, um das dort vorgesehene Ziel zu erreichen.

Wesentlich ist, dass ein Einsatz dieser bekannten Vorrichtung zum so genannten "dimensionellen Messen" nicht möglich ist; geometrische Messgrößen wie Längen, Parallelität, Flächen, Krümmungen oder Formparameter können nicht korrekt erfasst werden.

In DE 10 2006 008 552 A1 ist eine Prüfeinrichtung für rotationssymmetrische Werkstücke beschrieben und dargestellt, bei der mit Hilfe einer Matrixkamera eine Rundumsicht des Werkstücks gewonnen wird. Die optische Achse der Kamera muss hierbei koaxial zur Rotationsachse des Innenkonusspiegels und des Werkstücks ausgerichtet sein, das relativ zur Kamera ortsfest ist.

Gegenstand der EP 63 761 A1 ist eine Vorrichtung zur Einzelprüfung von Objekten, die durch Kreislinien begrenzt sind, z. B. optische Linsen oder Münzen. In einem dargestellten Beispiel werden diese auf einer Kreisbahn abgetastet, wozu von einem Strahler ein Laserstrahl über zwei Prismen zu einem schrägstehenden Spiegel umgelenkt wird, der von der Rotorwelle eines Motors waagrecht gegen einen stationären Spiegel abgelenkt wird, der die Rotorwelle konusförmig umgibt. Der Laserstrahl wird dadurch nochmals im rechten Winkel abgelenkt und fällt auf den Prüfling.

Aus US 2009/284754 A1 ist ein Rotationsprofilometer bekannt, das zum Abtasten kreisförmiger Gegenstände, hier Münzen dient, die auf einem rotierenden Tisch liegen. Von einer Lichtquelle wird ein Lichtstrahl über einen schrägstehenden Spiegel auf einen telezentrischen Abtastspiegel abgelenkt, dessen reflektierte Strahlen schräg auf den rotierenden Gegenstand fallen und eine lineare Scanlinie erzeugen.

In US 2004/0212797 A1 ist eine Vorrichtung mit zwei Liniensensoren beschrieben und dargestellt, die mittels einander überlappender, telezentrischer Linsen zur Orthogonalisierung der Sichtstrahlengänge Leiterplatten durch visuellen Vergleich mit einem Musterstück abtasten.

Die Bereitstellung telezentrischer Spiegeloptiken für Zeilenkameras über Sektorspiegel von Rotationskegeln und Kegelschnitt-Ringflächen sowie die hierzu angepasste Konzeption gleichartig gestalteter Parallellichtquellen ist in diesen Druckschriften weder berührt noch angesprochen.

Für viele Anwendungsfälle der Fertigungsmesstechnik mit optischer Sensorik benötigt man eine telezentrische Sicht auf das Prüfobjekt; im Unterschied zur perspektivischen Sicht ergibt sich mit einer telezentrischen Optik ein paralleler Sichtstrahlengang, so dass man das Prüfobjekt nicht in einer Zentralprojektion, sondern in einer Parallelprojektion erfasst. Bei einem dreidimensionalen Messobjekt lassen sich auf diese Weise ohne großen Aufwand Längen- und Breitenmaße gut erfassen, wobei gleichzeitig in Bohrungen ohne Parallaxenfehler hineingeschaut oder Berandungen in Projektionsrichtung auf Maßabweichungen kontrolliert werden können.

Telezentrische Abbildungssysteme für Zeilenkameras mit Linsenoptik sind auf dem Markt verfügbar und werden häufig eingesetzt. Der Preis, das Gewicht und der beanspruchte Raum solcher telezentrischen Optiken steigt jedoch rasch beträchtlich an, wenn es um Sichtfelder von mehr als 150 mm Durchmesser geht. Eine Kaskadierung solcher Optiken für große Scanlängen ist aus dem gleichen Grund vom Preis-/Leistungsverhältnis her indiskutabel.

Der Erfindung liegt daher die Aufgabe zu Grunde, eine Vorrichtung der eingangs genannten Art zur Verfügung zu stellen, die mit einem optischen und kameratechnischen Gerät die kostengünstige Bereitstellung einer bildzeilenbasierten, telezentrischen Optik in großer Breite erlaubt.

Die Lösung dieser Aufgabe ergibt sich aus den Merkmalen des Patentanspruchs 1. Weiterbildungen sind Gegenstand der Unteransprüche.

Die Vorteile der Erfindung lassen sich wie folgt zusammenfassen:

- Innenkonusspiegel oder allgemeiner Sektorspiegel von Kegelschnitt-Ringflächen können verhältnismäßig einfach und billig aus einem Sektor eines Rotationskegelstumpfes bzw. eines Kegelschnitt-Ringflächen-Stumpfes mit spiegelnder Innenfläche hergestellt werden;
- in Kombination mit einem Zeilensensor ergibt sich ein Gesamtsystem, mit dem man eine telezentrische Sicht über eine kreisbogenförmige Scankurve erhält;
- ein planares Strahlenbündel, das von einem Punkt der Rotationsachse des Kegelstumpfes bzw. des Stumpfes einer Kegelschnitt-Ringfläche ausgeht und dessen Bündelebene orthogonal zur Rotationsachse ist, wird so am Innenkonusspiegel (Sektorspiegel der Kegelschnitt-Ringfläche) reflektiert, dass die reflektierten Strahlen alle scheinbar von einem Punkt der Rotationsachse ausgehen (virtuelles Strahlzentrum).

Insbesondere wird das virtuelle Strahlzentrum bei einem Öffnungswinkel des den Kegelstumpfsektor erzeugenden Rotationskegels (bzw. allgemeiner bei einer Neigung der Rotationsachse gegenüber den Tangentialebenen der erzeugenden Kegelschnitt-Ringfläche längs der Reflexionspunkte) von 45° uneigentlich, d. h. ein gedachter unendlich ferner Punkt auf der Rotationsachse. Anders ausgedrückt sind in diesem Fall alle reflektierten Strahlen parallel.

Ist das originale, planare Strahlbündel das Sichtstrahlbündel eines mit einer üblichen (perspektivisch abbildenden) Linsenoptik versehenen Zeilensensors, dessen kalibriertechnisch ermittelter Fokuspunkt auf der Rotationsachse liegt, erhält man nach Reflexion am Innenkonusspiegel parallele Sichtstrahlen. Die Schnittkurve des reflektierten Sichtstrahlbüschels mit einer zur Rotationsachse senkrechten Ebene ist allerdings nicht mehr geradlinig, sondern ein Kreisbogen.

Der verwendete Zeilensensor kann dann im einfachsten Fall mit einem einfachen Linsenobjektiv betrieben werden. Entsprechend dem Öffnungswinkel des Sichtstrahlbüschels wird dann auch der Sektorwinkel des Innenkonusspiegels bestimmt. Insgesamt erhält man so eine telezentrische Optik für Zeilensensoren mit kreisbogenförmiger Scanlinie.

Neben der Preisgünstigkeit hat der telezentrische Scanner nach der Erfindung eine Reihe wesentlicher Vorzüge. So ist der Schärfentiefebereich in der Regel erheblich größer als bei linsenbasierten telezentrischen Systemen. Darüber hinaus kann man durch eine Abstandsvergrößerung des optischen Zentrum der Kamera gegenüber dem Innenkonusspiegel bzw. dem Sektorspiegel einer Kegelschnitt-Ringfläche auch ein hyperzentrisches oder endozentrisches optisches System erhalten, das für viele Oberflächeninspektionsaufgaben gut geeignet ist. Ähnliche Effekte mit anderer Bildparametrierung ergeben sich, wenn man den Öffnungswinkel des Innenkonusspiegels über 45° aufweitet oder auch einengt.

Für die praktische Anwendung wird entweder das Prüfobjekt oder der Zeilensensor mit vorgeschalteter Sektorspiegeloptik verfahren, wobei die Translationsrichtung in der Regel in einer zur Rotationsachse des Sektorspiegels senkrechten Ebene erfolgt. Der durch die kreisbogenförmigen Scanlinien in zeitlicher Sequenz abgetastete Bereich dieser Ebene wir nachstehend Scanbereich genannt.

Für eine übliche Bildgebung eines Prüfobjekts im Scanbereich muss die zunächst zirkulare Abtastung in ein übliches, orthogonales Bildkoordinatensystem umgerechnet, d. h. rechnerisch redigitalisiert werden.

Solche telezentrischen Spiegeloptiken für Zeilensensoren lassen sich leicht kaskadieren, wozu mehrere mit Innenkonusoptiken versehene Zeilensensoren aneinandergereiht werden. Hierbei wird man allerdings in der Regel eine geringfügige Überlappung der Scanbereiche erhalten, was bei der nachfolgenden Redigitalisierung für eine übliche Bildauswertung zu berücksichtigen ist.

Insbesondere bei einer mikrooptischen Ausführung führt eine lineare Kaskadierung bei den Vorsatzlinsen oft zu Platzbehinderungen. In dieser Situation lässt sich die erfindungsgemäß ausgebildete Vorrichtung nach einem anderen, wesentlichen Merkmal dadurch erweitern, dass die Spiegelflächen der Innenkonusspiegel alternierend voneinander abgewandt sind und damit auch die Zeilensensoren und ihre Vorsatzlinsen auf wechselnden Seiten liegen. Da sich im Überlappungsbereich der Spiegelsegmente Mehrfachaufnahmen derselben Bilddetails ergeben, müssen die erzeugten Bilddaten neu abtastend verrechnet werden, was jedoch ohne Probleme möglich ist. Damit können telezentrische Scanner beliebiger Breite kostengünstig aufgebaut werden.

Bei genauerer Berücksichtigung der Krümmungsverhältnisse am Innenkonusspiegel wird zur Erzielung optimaler Abbildungsschärfe durch den Zeilensensor auch die Vorsatzlinse (bzw. das Vorsatzlinsensystem) noch auf die Innenkonusspiegelgeometrie hin optimiert.

Alternativ kann, worauf weiter unten genauer eingegangen wird, die Abbildungsschärfe dadurch optimiert werden, dass man Sektorspiegel von speziellen Kegelschnitt-Ringflächen verwendet.

In weiterer Ausgestaltung der Erfindung kann auch die Lichtquellenseite in gleicher Weise wie die Sensorseite gestaltet werden. Im Idealfall benötigt man eine möglichst homogene Beleuchtung über einer kreisbogenförmigen Scanlinie. Insbesondere für Schattenwurfanwendungen mit sehr großem Schärfentiefebereich ist dabei eine telezentrische Beleuchtung zwingend notwendig. Auch in diesem Marktsegment ergeben sich die gleichen Preis-/Leistungsprobleme wie im Fall telezentrischer Optiken für Bildaufnehmer.

Aufgrund des Erfindungsgedankens lassen sich punktförmige Lichtquellen (im kohärenten Fall etwa Laserdioden, im nicht kohärenten Fall leistungsstarke Leuchtdioden) durch preisgünstige Linsenoptiken leicht zu einem planaren Lichtfächer aufweiten. Positioniert man nun das Zentrum dieses Lichtfächers wieder auf die Rotationsachse eines Innenkonusspiegels mit Öffnungswinkel 45°, erhält man nach Reflexion einen parallelen Strahlenvorhang mit kreisbogenförmigem Querschnitt.

Daraus ergibt sich, dass

- diese Art der Beleuchtung sehr gut als Gegenstück zum telezentrischen Sektorspiegel-Scanner geeignet ist und
- diese telezentrische Innenkonusbeleuchtung auch unabhängig vom telezentrischen Innenkonus-Scanner für Schattenwurfanwendungen eingesetzt werden kann.

Das Funktionsprinzip ist jedoch das gleiche, so dass die Erfindung einen weiten Anwendungsbereich erschließt.

Weitere Merkmale und Vorteile der Erfindung ergeben sich aus den Patentansprüchen und aus der folgenden Beschreibung von Ausführungsbeispielen, die in Zeichnung dargestellt sind. Es zeigen:

Figur 1    die Geometrie eines Kegelstumpfes zur Begriffserläuterung für einen Innenkonuspiegel,

Figur 2    die schematische Darstellung einer telezentrischen Zeilenkamera mit kreisbogenförmiger Scanlinie an dem zugeordneten Innenkonusspiegel,

Figur 3    ein Gehäuse zur Aufnahme der Vorrichtung gemäß der Erfindung,

Figur 4    die Unteransicht des Gehäusebodens der Figur 3 in verkleinertem Maßstab,

Figur 5    die schematische Darstellung einer Variante als Mikrosystem mit Sammellinse,

Figur 6    die Draufsicht auf das Mikrosystem der Figur 5,

Figur 7    die alternierende Kaskadierung mehrerer Mikrosysteme nach den Figuren 5 und 6,

Figur 8    die geometrische Anordnung der Abtastpunkte bei einer alternierenden Kaskadierung und linearer Verfahrung des Prüfobjekts oder des Scanners sowie die Orte der algorithmischen Neuabtastung zur weiteren Auswertung,

Figur 9    die Draufsicht auf die Parallellichtquelle gemäß der Erfindung mit einer zur Linie aufgeweiteten Punktlichtquelle anstelle des Zeilensensors,

Figur 10    eine Kombination des Scanners der Figur 3 mit einer Parallellichtquelle,

Figur 11    ein Fokuspunktpaar einer Geraden,

Figur 12    eine Ellipse mit ihren beiden Brennpunkten (Fokuspaar),

Figur 13    eine Hyperbel mit ihrem Fokuspunktpaar,

Figur 14    eine Ellipse in Schräglage,

Figur 15    eine Parabel mit darin reflektiertem Strahl,

Figur 16    eine Hyperbel in Schräglage,

Figur 17    einen Schnitt durch eine Objektebene mit einem Sektorspiegel aus einer Kegelschnitt-Ringfläche in ausgezeichneter Lage,

Figur 18    den Stumpfsektor eines Rotationsparaboloids und

Figur 19    einen Sektor-Paraboloidspiegel.

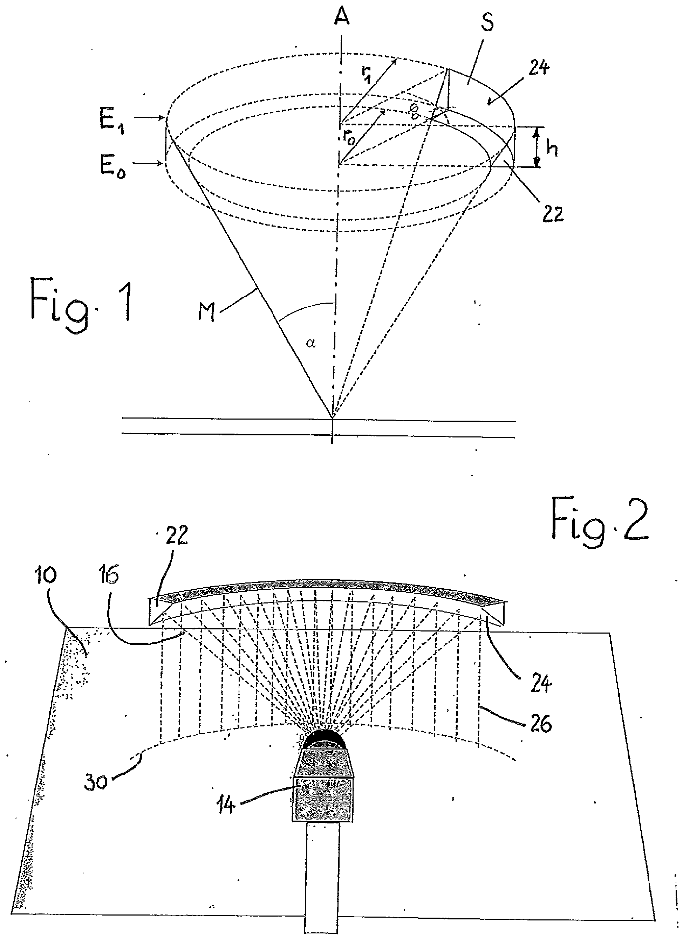

In Figur 1 ist zur Erläuterung der nachstehend verwendeten Begriffe die Geometrie eines Rotationskegels dargestellt, aus dem ein Kegelstumpfsektor S zur Herstellung eines Innenkonusspiegels 22 ausgeschnitten wird.

Die verwendeten Kegelstümpfe sind stets Ausschnitte aus Rotationskegeln. Dieser Rotationskegel hat eine Rotationssymmetrieachse A. Sie wird im Folgenden Rotationsachse des Kegelstumpfes oder, falls es sich nur um einen Sektor des Kegelstumpfes handelt, auch Rotationsachse des Kegelstumpfsektors S genannt. Die hier auftretenden Kegelstümpfe sind stets durch zwei zur Rotationsachse A senkrechte Ebenen E0 und E1 begrenzt. Ihr Abstand wird als Höhe h des Rotationskegelstumpfes bezeichnet. In einer dieser senkrechten Ebenen kann man ein Polarkoordinatensystem festlegen, dessen Zentrum der Durchstoßpunkt mit der Rotationsachse A ist. Wählt man zusätzlich die Rotationsachse A als z-Achse und als Ursprung die Spitze des Rotationskegels, erhält man ein Zylinderkoordinatensystem. Betrachtet man für einen Grenzpolarwinkel $\varphi_0$ nur Punkte des Kegelstumpfes mit Polarwinkel $\varphi$ größer oder gleich 0, aber kleiner oder gleich $\varphi_0$, erhält man einen Kegelstumpfsektor mit Sektorwinkel $\varphi_0$. Der Öffnungswinkel $\alpha$ eines Kegelstumpfsektors S ist dagegen der Winkel der Rotationsachse A mit einer beliebigen Mantellinie M des zugehörigen Rotationskegels. Die begrenzenden, zur Rotationsachse A senkrechten Ebenen des Kegelstumpfsektors S heißen obere Deckebene E1 und untere Deckebene E0 (mit Zylinderkoordinaten $z = z_0$ und $z = z_1$). Punkte auf dem Kegelstumpfsektor S mit z-Koordinate $z_1$ haben einen einheitlichen Abstand r von der Rotationsachse A, den Außenradius $r_1$ des Kegelstumpfes. Ebenso haben Punkte mit z-Koordinate $z_0$ einen einheitlichen Abstand r von der Rotationsachse, den Innenradius $r_0$ des Kegelstumpfsektors S.

In dem hier dargestellten Fall betrachtet man genauer den räumlichen Körper, der bezüglich dieses Zylinderkoordinatensystems nur Punkte ($\varphi$, r, z) mit $0 \leq \varphi \leq \varphi_0$, $r_0 \leq r \leq r_1$ und $z_0 \leq z \leq z_1$ besitzt. Seine begrenzende Innenfläche ist dann der eigentliche Kegelstumpfsektor S, während er nach außen zylindrisch begrenzt ist. Ist die begrenzende Innenfläche 24 verspiegelt, heißt das entstehende räumliche Objekt Innenkonusspiegel 22.

Figur 2 zeigt den grundsätzlichen Aufbau der Vorrichtung gemäß der Erfindung mit einer zur Rotationsachse A senkrechten Schnittebene 10. Das Prüfobjekt selbst ist nicht eingezeichnet. Es wird parallel zur Rotationsachse A projiziert. Die virtuellen Sichtstrahlen 16 eines Zeilensensors 14, beispielsweise einer Zeilenkamera laufen in einem Punkt, dem optischen Zentrum des Sensors, zusammen. Dieser muss auf der Rotationsachse A des Innenkonusspiegels 22 liegen, dessen Innenfläche 24 die Verspiegelung trägt. Die exakte Positionierung erfolgt im Rahmen eines Justier- und Feinmontageprozesses. Da der Öffnungswinkel $\alpha$ vorzugsweise 45° beträgt, werden mit diesen geometrischen Bedingungen die divergenten Sichtstrahlen 16 an der spiegelnden Innenfläche 24 als paralleles Strahlenbündel 26 reflektiert. Dieses hat eine kreisbogenförmige Schnittkurve mit der Schnittebene 10, die Scanlinie 30.

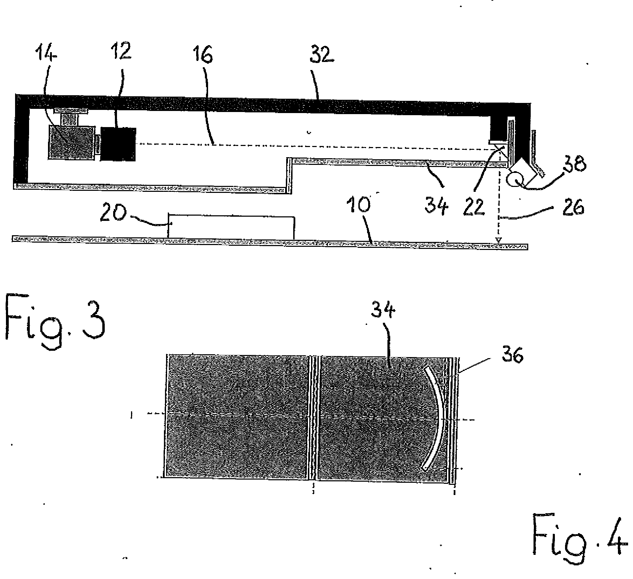

Wie in Figur 3 schematisch angedeutet, wird im praktischen Einsatz die Kombination aus Zeilensensor 14, Vorsatzoptik 12 (diese kann auch aus einer einfachen Lochblende bestehen) und Innenkonusspiegel 22 in einem Scannergehäuse 32 mit Auslassschlitz 36 für die telezentrischen Sichtstrahlen 16 eingehaust und entweder das auf der Ebene 10 liegende Prüfobjekt 20 oder der Scanner 32 kontinuierlich und meist rechtwinklig zur Sehne der Scanlinie 30 (Figur 2) verfahren. Die auf den Innenkonusspiegel 22 auftreffenden Sichtstrahlen 16 werden als parallele Strahlen 26 senkrecht auf die Schnittebene 10 reflektiert. Hierzu ist in den Boden 34 des Gehäuses 32 ein kreisbogenförmiger Schlitz 36 als Austrittöffnung für die parallelen Strahlen 26 eingearbeitet. An dem Gehäuse 32 kann im Bereich des Schlitzes 36 eine Beleuchtungsquelle 38 angebracht sein.

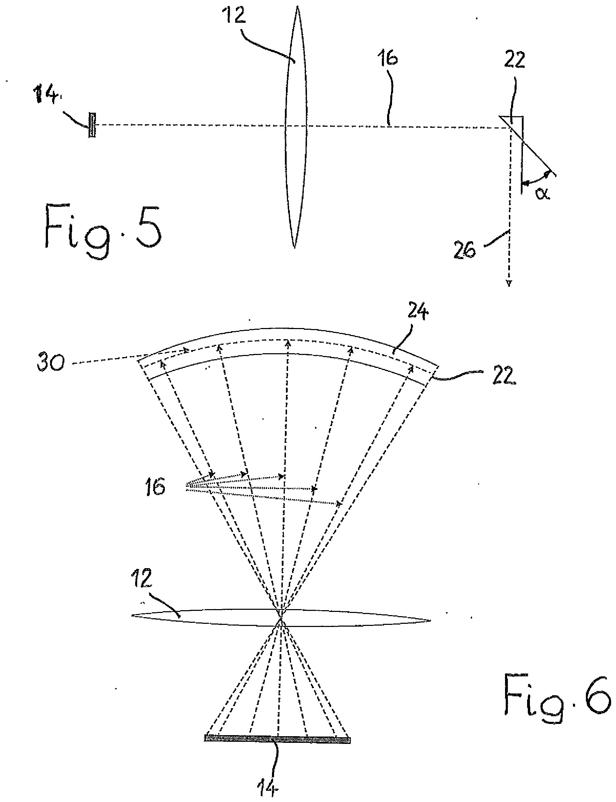

Die Figuren 5 und 6 zeigen vergrößert die wesentlichen konstruktiven Merkmale der Erfindung in der Ausführung als Mikrosystem: Der Zeilensensor 14 ist mit einer Vorsatzlinse 12 und einer entsprechenden, nicht dargestellten Blende fokussiert. Das Bündel der Sichtstrahlen 16 trifft auf den schmalen Innenkonusspiegel 22 und wird als Parallelstrahlenbündel 26 reflektiert.

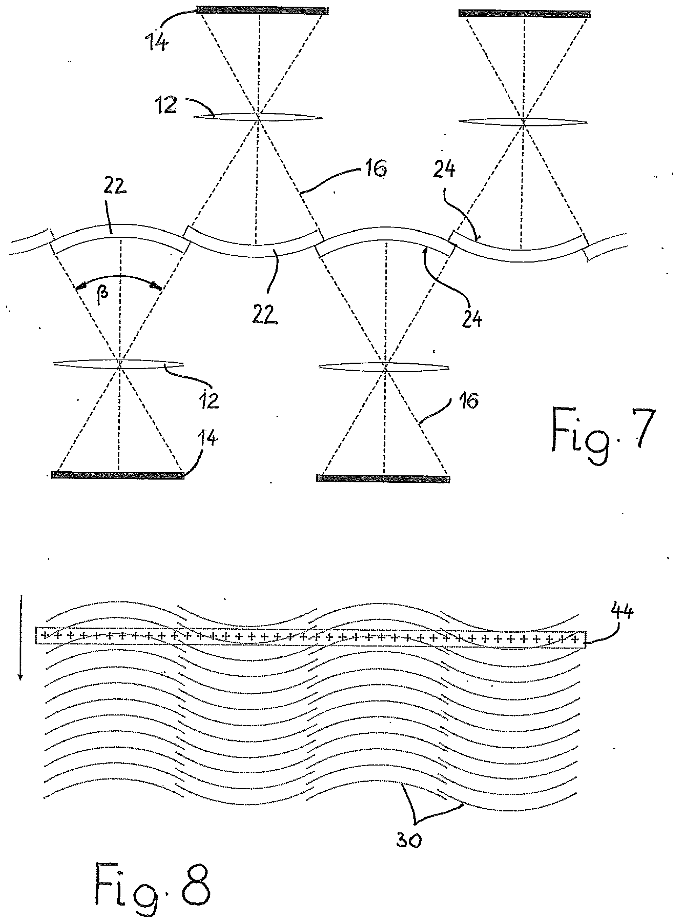

Insbesondere mit einer in Figur 7 gezeigten, alternierenden Ausrichtung der Spiegel 22 und Zeilensensoren 14 ist dieser rudimentäre optische Aufbau gut zur Kaskadierung in langen Scannern einsetzbar. Da es aus Preisgünden nicht möglich ist, die einzelnen Segmente der Innenkonusspiegel 22 in beliebiger Größe herzustellen, kann durch diese Kaskadierungsmöglichkeit ein sehr kostengünstiges System zur Verfügung gestellt werden. Da von dem Kegelstumpf (vgl. Figur 1) nur etwa ein Sechstel des Umfangs benötigt wird, liegt der Zentriwinkel ß der Spiegelsegmente in der Größenordnung von 60°.

Figur 7 zeigt die alternierende Anordnung der Zeilensensoren 14, Vorsatzlinsen 12 und Innenkonusspiegel 22 ohne wechselseitige Bauraumbehinderung der Linsen 12, da die Innenkonusspiegel 22 mit ihren Spiegelflächen 24 alternierend voneinander abgewandt sind. Selbstverständlich muss dann die Ausleseelektronik und Chipansteuerung separat beigestellt werden.

In Figur 8 ist das Redigitalisierungsschema 44 (algorithmische Neuabtastung) der erzeugten Grauwertdaten gemäß einer Anordnung wie in Figur 7 entlang der kreisbogenförmigen Scankurven 30 angedeutet.

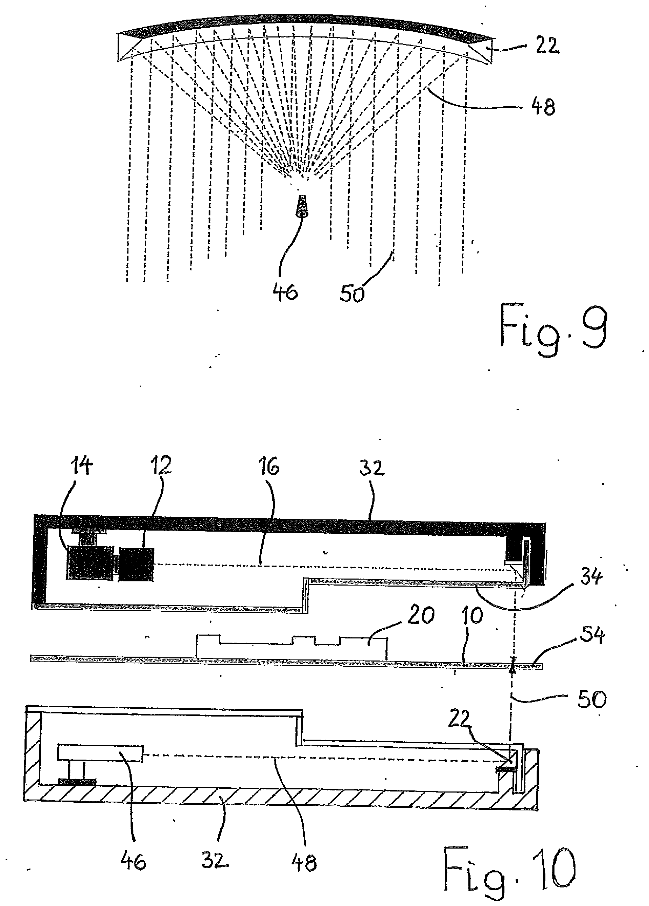

Das Prinzip der Kopplung einer punktuellen Quelle in einer Strahlengangebene mit einem Innenkonusspiegel 22 kann statt für Sichtstrahlen 16 auch invers für Lichtstrahlen 48 einer Punktlichtquelle 46 mit planarer Abstrahlcharakteristik, also etwa einer linienartig aufgeweiteten Laserlichtquelle verwendet werden. Dann bilden, wie Figur 9 zeigt, die reflektierten Strahlen 50 gut paralleles Licht 50 in einem allerdings kreisbogenförmigen Querschnitt. Dennoch erhält man dann eine gute Schattenwurfprojektion für sehr unterschiedliche Prüfobjektabstände (große Schärfentiefebereiche), wenn man auf der Empfängerseite ein geometriegleiches Innenkonusspiegel-Zeilensensorsystem, wie oben beschrieben, als Detektor verwendet (vgl. Figur 10). Da die exakte Ausrichtung der Spiegelkomponenten äußerst empfindlich ist, wird man hier allerdings schmale Bündel von akquirierten Bildzeilen bevorzugen. Das kann selbstverständlich auch mit auf wenige Zeilen reduzierten Bildausschnitten von CMOS-Matrixkameras realisiert werden.

Die Figuren 9 und 10 zeigen hierzu schematisch die Anordnung der Erfindung in der Ausprägung als Parallellichtquelle. Durch eine Vorsatzoptik wird der Strahlgang einer Punktlichtquelle 46 zu einem Strahlenfächer 48 aufgeweitet. Ist die Fächerebene senkrecht zur Rotationsachse A des Innenkonusspiegels 22 und liegt der virtuelle Fokus des Strahlenfächers 48 auf dieser Rotationsachse A, erhält man nach Reflexion am Innenkonusspiegel 22 einen parallelen Lichtvorhang 50. Die reflektierten Lichtstrahlen 50 werden zur Erzeugung einer Schattenwurfprojektion unterschiedlicher Prüfobjekte 20 verwendet, die auf einer transparenten oder transluzenten Scheibe 54, z. B. einer Mattscheibe liegen.

Figur 10 zeigt als Beispiel die Kombination des oben erläuterten Scanners als Detektor, bei dem das optische Emissionselement der Zeilensensor 14 ist, mit einem unter der Scheibe 54 (Ebene 10) angeordneten Emissionselement in Form einer Punktlichtquelle 46.

Die Erfindung eröffnet daneben aber auch die Möglichkeit, die im unteren Teil der Figur 10 schematisch angedeutete Einrichtung mit Parallellichterzeugung zur Schattenwurfprojektion ohne den über der Ebene 10 vorgesehenen Detektor einzusetzen. Dieser könnte durch eine Matrixkamera oder sogar durch eine einfache Photokamera ersetzt werden. Der Parallellichtvorhang 50 projiziert auch hier ein räumliches Objekt 20 im Schattenwurf auf der transluzenten Scheibe 54 (Mattscheibe). Da man für jede Position des Lichtvorhangs 50 immer nur einen kreisbogenförmigen Ausschnitt des Schattenwurfs sehen würde, wäre das für das Auge etwas verwirrend. Wenn man allerdings die Scheibe 54 mit einer Kamera beobachtet und lange genug belichtet, um alle akquirierten Schattenwurf-Scanlinien 30 bei einem schnellen Durchfahren des Parallellichtvorhangs 50 zu erfassen, erhält man den kompletten Schattenwurf in Parallelprojektion.

Bei der verspiegelten Fläche 24 der Figuren 1 und 2 des Innenkonusspiegels 22 handelt es sich um die Mantelfläche eines geraden Kreiskegelstumpfes, d. h. um gerade Erzeugende, was für eine Vielzahl von Anwendungsfällen eine ausreichende Messgenauigkeit liefert. Wenn jedoch eine deutlich bessere Abbildungsschärfe gewünscht oder gefordert wird, ist die Bedingung nicht mehr ausreichend, wonach nur der Tangentialwinkel (Öffnungswinkel α) zwischen der Oberflächennormalen und der Rotationsachse 45° betragen muss. Für das weitere Vorgehen spielt darüber hinaus die Kostengünstigkeit des gewünschten telezentrischen Systems eine entscheidende Rolle. Die Fertigung eines rotationssymmetrischen Sektorspiegels mit radialem Kegelschnittquerschnitt ist relativ preisgünstig möglich. Unabdingbar kommen nun aber die Kosten für die Optik der Zeilenkamera hinzu, die damit natürlich so einfach wie möglich gehalten werden sollte. Nicht akzeptabel sind selbstverständlich alle Lösungen, die sofort wieder in die Größenordnung von klassischen telezentrischen Linsenoptiken führen.

Es gelingt durch geeignete Wahl der radialen Querschnitte der Kegelschnitt-Ringfläche, in sehr guter Näherung eine kreisbogenförmige Anordnung von (virtuellen oder reellen) Bildpunkten der Scanlinienpunkte so in die Sichtstrahlebene zu "heben", dass das Zentrum des Bildpunktkreises mit dem optischen Zentrum der Zeilenkamera übereinstimmt. Dabei hat man sogar eine gewisse Freiheit bezüglich des Radius dieses Bildpunktkreises oder des Abstands des Sektorspiegels von der Scanlinie.

Natürlich sind nun die von der Optik der Zeilenkamera anvisierten Bildpunkte zwar gleichweit vom optischen Zentrum entfernt, aber sie liegen nicht in einer Gegenstandsebene senkrecht zur optischen Achse. Man hat also statt einer beim Entwurf von Kameraoptiken oft zu kompensierenden "Bildfeldkrümmung" nun eine "Gegenstandsfeldkrümmung", die in der Linsenoptik zu korrigieren ist. Dies ist jedoch mit einer geeigneten Standardmodifikation der Optikentwürfe der Vorsatzoptiken möglich. Mit dieser Anpassung der Linsenoptik der Zeilenkamera erhält man nun auch scharfe telezentrische Bilder der Scannlinie.

Allerdings verbirgt sich hinter der oben gewählten Beschreibung der Bildpunkte mit dem Zusatz "in sehr guter Näherung" noch eine Anforderung an die Gestalt der Blende der Vorsatzoptik. Sie sollte parallel zur Rotationsachse eher schlitzfömig (also genügend schmal) sein, da sonst Unschärfen in den Zeitstapelbildern zunehmen.

Um die Abbildungsschärfe zu verbessern, ist daher in Weiterbildung der Erfindung vorgesehen, für die verspiegelte Innenfläche 24 des Kegelstumpfsektors S zusätzlich zu der in Figur 1 gezeigten Kreisbogenkrümmung in der Ebene E auch in der dazu rechtwinkligen, die Rotationsachse A enthaltenden Ebene eine Krümmung vorzusehen. Grundlage hierfür sind die weiteren Kegelschnitte Ellipse, Parabel und Hyperbel, die bei einer Drehung um eine Achse jeweils einen Torus erzeugen. Der optisch geläufige Fall eines Paraboloids ist für diese Anwendungen jedoch gerade nicht geeignet, weil dann die Fokussierung im Unendlichen liegt.

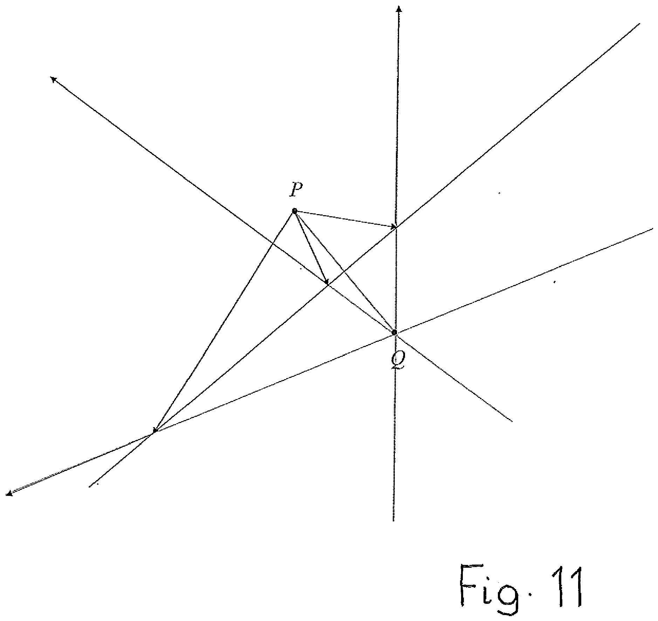

Die Figuren 11 bis 13 zeigen Paare von Punkten P, Q der Trägerebene räumlicher Kegelschnitte. Es handelt sich dabei um Fokuspaare, d.h. Paare von Brennpunkten des erzeugenden Kegelschnitts, die die folgenden Eigenschaften haben:

Für jeden von P ausgehenden Strahl, der den Kegelschnitt trifft, liegt der reflektierte Strahl auf einer Geraden durch Q.

Wie man auf Grund der Reflexionsgesetze sofort sieht, ist mit jedem Fokuspaar (P, Q) eines Kegelschnitts auch (Q, P) ein Fokuspaar. Paare von Brennpunkten von Kegelschnitten sind Fokuspaare, aber für Geraden ist der Fokuspaarbegriff allgemeiner.

Für eine Gerade bildet jedes Paar von Punkten, die spiegelbildlich zu der Geraden liegen, ein Fokuspaar (vgl. Figur 11).

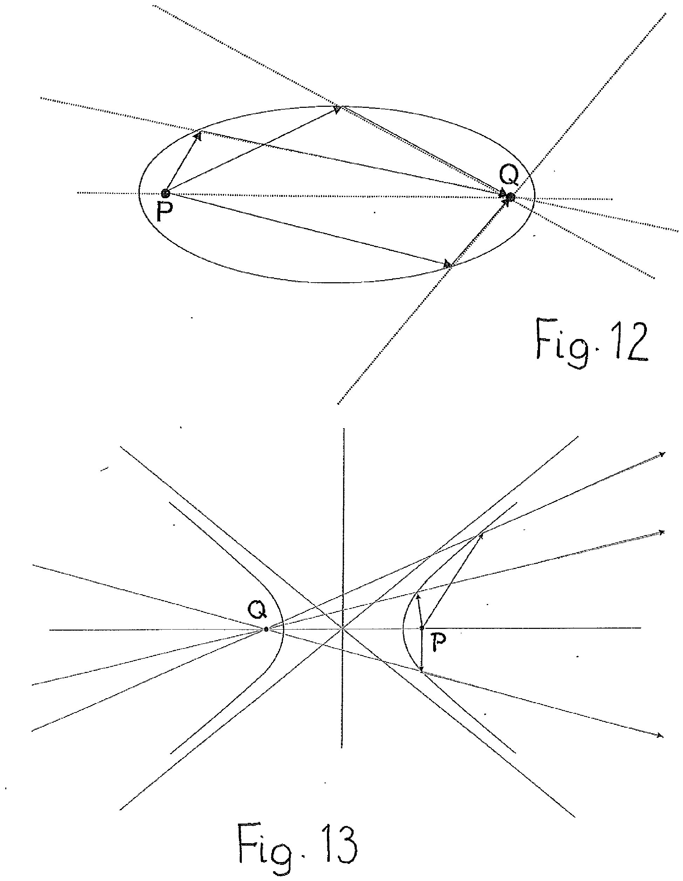

In Figur 12 ist eine Ellipse mit ihren beiden Brennpunkten P und Q dargestellt, die ein Fokuspaar bilden. Daraus ergibt sich, dass alle von P ausgehenden Strahlen an der Randlinie der Ellipse in den zweiten Brennpunkt reflektiert werden. Das reelle Bild von P erscheint mithin in Q.

Figur 13 zeigt das Fokuspunktpaar P, Q einer Hyperbel, wobei auch hier jeder von P ausgehende Strahl am gegenüberliegenden Hyperbelast virtuell so reflektiert wird, dass er durch den zweiten Brennpunkt Q verläuft. Das virtuelle Bild von P ist Q.

Erweitert man den Fokuspunktbegriff projektiv auf Fernpunkte, haben auch Parabeln Fokuspunktpaare. Einer der Fokuspunkte ist der Brennpunkt P der Parabel, der zweite der Fernpunkt in Richtung der Symmetrieachse der Parabel.

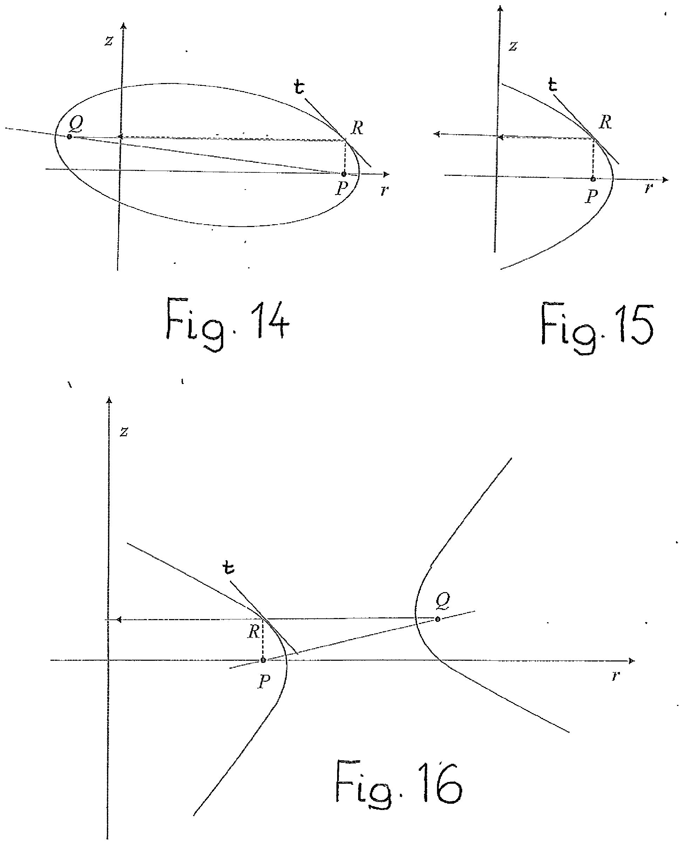

Die Figuren 14, 15 und 16 zeigen, dass es für ein Fokuspaar P,Q eines Kegelschnitts einen Punkt R auf dem Kegelschnitt gibt derart, dass der reflektierte Strahl des Strahls von P in Richtung R (also Reflexion in R) senkrecht auf dem Ausgangsstrahl steht. Das ist bei eigentlichen Fokuspunkten P,Q genau dann der Fall, wenn der Thaleskreis über P,Q den Kegelschnitt schneidet. Für Ellipsen (Figur 14) gilt dies erst bei ausreichender Exzentrizität. In einem solchen Punkt R nimmt die Tangente t an den Kegelschnitt im Punkt R einen Winkel von 45° gegenüber dem einfallenden Strahl von P nach R und gegenüber dem in R reflektierten Strahl von R nach Q ein.

Ist ein beliebiger Strahl s in der Trägerebene des Kegelschnitts gegeben, kann man den Kegelschnitt und das zugehörige Fokuspaar P, Q so drehen, dass der einfallende Strahl von P nach R parallel und gleichgerichtet zu s verläuft (vgl. Figuren 14 und 16).

Der radiale Schnitt durch eine Kegelschnitt-Ringfläche in Figur 16 zeigt, dass bei geeigneter Form und Verkippung des Kegelschnitts die Lichtleistungsdichte im Objektpunkt P der Scanlinie virtuell wieder im Bildpunkt Q erscheint, wobei Q in der Mittelebene des Sektorspiegels liegt. P und Q beschreiben bei Rotation um die z-Achse Kreise.

Bezeichnet g die Verlängerungsgerade des Strahls s, kann man durch eventuelle Verschiebung des Kegelschnitts senkrecht zu g erreichen, dass der im Punkt R reflektierte Strahl die Gerade g schneidet. Sind P' und Q' die entsprechend rotierten und translierten Bildpunkte von P und Q, bildet auch P', Q' ein Fokuspaar des rotierten und translierten Kegelschnitts. Dann ist der Kegelschnitt in einer ausgezeichneten Lage zum Strahl s und dem Fokuspaar P', Q'.

Bei Rotation um g eines Kegelschnitts in ausgezeichneter Lage gegenüber dem Strahl s und dem Fokuspaar P', Q' erhält man einen ausgezeichneten Kegelschnitt-Torus. Beide Brennpunkte des Kegelschnitts beschreiben dann einen Kreis. Objektpunkte entlang des ersten Brennpunktkreises erscheinen (zunächst nur für den Strahlengang in der jeweiligen radialen Ebene) als reelle oder virtuelle Bildpunkte wieder entlang des zweiten Brennpunktkreises. Es gibt nun für jeden Kegelschnitt in ausgezeichneter Lage genau einen Radius des ersten Brennpunktkreises (also genau einen Abstand der Rotationsachse der Kegelschnittringfläche vom ersten Brennpunkt), für den die Bildung reeller bzw. virtueller Bildpunkte entlang des zweiten Brennpunktkreises nicht nur in der jeweiligen radialen Schnittebene, sondern weitgehend auch für die gesamten räumlichen Strahlbüschel, die von Objektpunkten längs des ersten Brennpunktkreises ausgehen, gezeigt werden kann.

Durch Wahl passender Kegelschnitte in ausgezeichneter Lage kann man also Anforderungen an Arbeitsabstände und Radien der Scankreisbögen erfüllen und erhält (bei angepasstem Objektiv der Zeilenkamera) gleichzeitig Telezentrie und optimale Abbildungsschärfen.

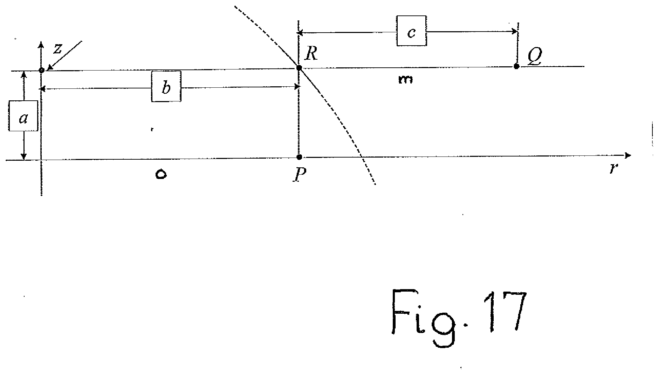

Figur 17 zeigt im Detailausschnitt einen Kegelschnitt in ausgezeichneter Lage, wobei Z das optische Zentrum der Kamera ist und Q in der Mittelebene m der virtuelle Bildpunkt von P ist. Nach der Telezentriebedingung muss am Reflexionspunkt R die Tangentenneigung bezüglich der z-Achse 45° betragen.

Damit stimmt der Abstand a der Objektebene o von der Mittelebene m des Sektorspiegels mit der z-Koordinate des zweiten Fokuspunkts überein und kann nicht mehr frei gewählt werden. Eine andere Wahl des Arbeitsabstands führt notwendigerweise zu einem anderen Kegelschnitt in ausgezeichneter Lage.

Der Stumpfsektor wird wieder durch zwei zur z-Achse senkrechte Deckebenen begrenzt, deren Mittelebene die Gleichung z = a erfüllt.

Die virtuelle Bildpunktbedingung gilt zunächst nur in der eingezeichneten Schnittebene. Von P ausgehende Strahlen, die nicht in dieser Schnittebene bleiben, aber den Sektorspiegel treffen, werden nach Reflexion nur dann ebenfalls (in sehr guter Näherung) scheinbar von Q ausgehen, wenn

$$c = \frac{a \cdot b}{b - a}$$

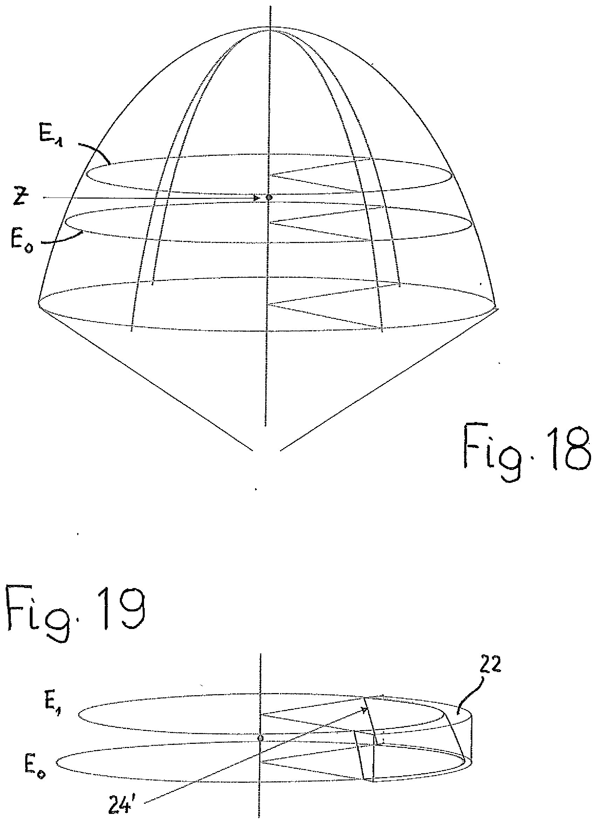

Figur 18 zeigt den Stumpfsektor eines Rotationsparaboloids mit dem Zentrum Z, aus dem in den beiden Ebenen $E_0$ und $E_1$ eine in Figur 19 gezeigte Scheibe ausgeschnitten ist, aus der ein Stumpfsektorspiegel mit paraboloidischer Innenfläche 24' ausgeschnitten ist, die verspiegelt werden kann. Solche "Off-Axis-Paraboloide" sind Standardspiegel in der Optik. Für die vorliegenden Zwecke sind sie allerdings wegen ihrer Fokussierung im Unendlichen ungeeignet.

**Patentansprüche**

1. Vorrichtung zur optischen Erfassung von Prüfobjekten mit wenigstens einem optischen, als Sensor oder Lichtquelle ausgebildeten Element, in dessen Strahlengang ein als Innenkonusspiegel ausgebildeter Umlenkspiegel angeordnet ist, **dadurch gekennzeichnet, dass** das Element als photoelektrischer Zeilensensor (14) mit Vorsatzoptik (12) oder Punktlichtquelle (46) mit Vorsatzoptik (12) ausgebildet ist, wobei die Vorsatzoptik (12) den Strahlengang der Punktlichtquelle (46) zu einem planaren Strahlenfächer (48) aufweitet, und dass das Element und der diesem gegenüberliegende Innenkonusspiegel (22) eine telezentrische Optik mit kreisbogenförmiger Scanlinie bilden und so angeordnet sind, dass die Ebene der vom optischen Zentrum der Vorsatzoptik (12) ausgehenden Sichtstrahlen (16) des Zeilensensors (14) bzw. die Ebene des Strahlenfächers (48) senkrecht zur Rotationsachse (A) des Innenkonusspiegels (22) ausgerichtet ist, der aus einem Sektor (S) einer Kegelschnitt-Ringfläche mit spiegelnder Innenfläche (24) besteht, wobei die telezentrische Optik relativ zu den abzutastenden Prüfobjekten (20) beweglich ist.

2. Vorrichtung nach Anspruch 1, **dadurch gekennzeichnet, dass** die Innenfläche (24') in zwei zueinander rechtwinkligen Ebenen konkav gekrümmt ist.

3. Vorrichtung nach Anspruch 2, **dadurch gekennzeichnet, dass** der Sektor (S) Teil eines Rotationsellipsoids oder eines Rotationshyperboloids ist.

4. Vorrichtung nach einem der vorhergehenden Ansprüche, **dadurch gekennzeichnet, dass** der Zentriwinkel (β) des Kegelstumpfsektors (S) in der Größenordnung von 60° liegt.

**5.** Vorrichtung nach einem der vorhergehenden Ansprüche, **dadurch gekennzeichnet, dass** der Öffnungswinkel ($\alpha$) des Innenkonusspiegels (22) in der Größenordnung von 45° liegt.

**6.** Vorrichtung nach einem der vorhergehenden Ansprüche, **dadurch gekennzeichnet, dass** mehrere Innenkonusspiegel (22) so aneinandergereiht sind, dass ihre Spiegelflächen (24) alternierend voneinander abgewandt sind.

**7.** Vorrichtung nach einem der vorhergehenden Ansprüche, **dadurch gekennzeichnet, dass** die Emissionselemente und die Innenkonusspiegel (22) in einem über dem Prüfobjekt (20) kontinuierlich verfahrbaren Gehäuse (32) angebracht sind, dessen Boden (34) unterhalb des Innenkonusspiegels (22) einen teilkreisförmigen Schlitz (36) als Austrittsöffnung für die parallelen, auf das Prüfobjekt (20) auftreffenden Strahlen (26) hat.

**8.** Vorrichtung nach Anspruch 7, **dadurch gekennzeichnet, dass** an dem Gehäuse (32) im Bereich des Schlitzes (36) eine Beleuchtungsquelle (38) angebracht ist.

**9.** Vorrichtung nach einem der vorhergehenden Ansprüche, **dadurch gekennzeichnet, dass** jedem Zeilensensor (14) mit zugeordnetem Innenkonusspiegel (22) ein geometriegleiches Lichtquellensystem mit baugleichen Innenkonusspiegeln (22) zugeordnet ist, bei dem jedem Zeilensensor (14) eine Punktlichtquelle (46) entspricht.

**10.** Vorrichtung nach Anspruch 9, **dadurch gekennzeichnet, dass** die Zeilensensoren (14) und die Punktlichtquellen (46) in zueinander parallelen, durch eine transparente oder transluzente Scheibe (54) getrennten Ebenen synchron verfahrbar sind.

**11.** Vorrichtung nach einem der vorhergehenden Ansprüche, **dadurch gekennzeichnet, dass** die optischen Elemente Punktlichtquellen (46) zur Erzeugung eines Strahlenfächers (48) sind, denen im Strahlengang entsprechende Innenkonusspiegel (22) zur Erzeugung eines Parallellichtvorhangs (50) gegenüberliegen, der auf einer das Prüfobjekt (20) aufnehmenden, transparenten oder transluzenten Scheibe (54) das Prüfobjekt (20) im Schattenwurf projiziert, zu dessen Erfassung über der Scheibe (54) eine Photokamera angeordnet ist.

**Claims**

**1.** A device for the optical detection of test objects, having at least one optical element designed as a sensor or light source, in the optical path of which is arranged a deflecting mirror designed as an inner cone mirror, **characterized in that** the element is designed as a photoelectric line sensor (14) with a supplementary optical system (12) or as a point light source (46) with a supplementary optical system (12), wherein said supplementary optical system (12) expands the beam path of the point light source (46) to a planar beam fan (48), and **in that** the element and the inner cone mirror (22) located opposite from said element form a telecentric optical system with a scan line in the shape of a circular arc and that these are arranged in such a manner that the plane of the light beams (16) originating from the optical centre of the supplementary optical system (12) of the line sensor (14) or the plane of the beam fan (48) is aligned perpendicular to the rotational axis (A) of the inner cone mirror (22), which consists of a sector (S) of a ring surface of a truncated cone with a reflecting interior surface (24), wherein the telecentric optical system is moveable relative to the test objects (20) to be scanned.

**2.** The device according to Claim 1, **characterized in that** the interior surface (24') is concavely curved in two planes that are perpendicular to each other.

**3.** The device according to Claim 2, **characterized in that** the sector (S) is a portion of a spheroid or a circular hyperboloid.

**4.** The device according to any one of the preceding claims, **characterized in that** the central angle ($\beta$) of the truncated cone sector (S) is of the order of 60°.

**5.** The device according to any one of the preceding claims, **characterized in that** the opening angle ($\alpha$) of the inner cone mirror (22) is in the order of 45°.

**6.** The device according to any one of the preceding claims, **characterized in that** a plurality of inner cone mirrors (22) are aligned such that their reflective surfaces (24) alternately face away from each other.

**7.** The device according to any one of the preceding claims, **characterized in that** the emission elements and the inner cone mirrors (22) are arranged inside a housing (32) continuously displaceable above the test object (20), the bottom (34) of said housing (32) having a partially circular slot (36) underneath the inner cone mirror (22) as an outlet opening for the parallel beams (26) reaching the test object (20).

**8.** The device according to Claim 7, **characterized in that** a light source (38) is arranged inside the housing (32) in the area of the slot (36).

**9.** The device according to any one of the preceding claims, **characterized in that** each line sensor (14) with its associated inner cone mirror (22) is allocated a geometrically identical light source system with inner cone mirrors (22) of identical designs, wherein each line sensor (14) corresponds to a point light source (46).

10. The device according to Claim 9, **characterized in that** the line sensors (14) and the point light sources (46) are displaceable synchronously in parallel planes separated by a transparent or translucent plate (54).

11. The device according to any one of the preceding claims, **characterized in that** the optical elements are point light sources (46) for generating a beam fan (48), wherein corresponding inner cone mirrors (22) are placed opposite from said elements in the beam path to generate a parallel light curtain (50), which projects a shadow of the test object (20) onto a transparent or translucent plate (54) capturing the test object (20), wherein a photographic camera is arranged above the plate (54) for capturing said shadow.

**Revendications**

1. Dispositif pour la détection optique d'objets à contrôler avec au moins un élément optique constitué comme un capteur ou une source lumineuse dans la trajectoire de faisceau duquel est disposé un miroir de déviation constitué comme un miroir à cône interne, *caractérisé en ce que* l'élément est constitué comme capteur linéaire photoélectrique (14) avec une optique additionnelle (12) ou une source lumineuse ponctuelle (46) avec optique additionnelle (12), l'optique additionnelle (12) élargissant la trajectoire de faisceau de la source lumineuse ponctuelle (46) en un éventail de faisceau planaire (48) et *en ce que* l'élément et le miroir à cône interne (22) opposé à celui-ci forment une optique télécentrique avec ligne de balayage en forme d'arc de cercle et sont disposés de telle sorte que le plan du faisceau de visée (16) partant du centre optique de l'optique additionnelle (12) du capteur linéaire (14) ou le plan de l'éventail de faisceau (48) est orienté perpendiculairement à l'axe de rotation (A) du miroir à cône interne (22), qui est composé d'un secteur (S) d'une surface annulaire à section conique avec surface interne spéculaire (24), l'optique télécentrique étant mobile par rapport aux objets à contrôler (20) à balayer.

2. Dispositif selon la revendication 1, *caractérisé en ce que* la surface interne (24') est courbée de façon concave en deux plans à angle droit l'un par rapport à l'autre.

3. Dispositif selon la revendication 2, *caractérisé en ce que* le secteur (S) fait partie d'un ellipsoïde de rotation ou d'un hyperboloïde de rotation.

4. Dispositif selon l'une quelconque des revendications précédentes, *caractérisé en ce que* l'angle au centre ($\beta$) du secteur tronconique (S) se situe dans l'ordre de grandeur de 60°.

5. Dispositif selon l'une quelconque des revendications précédentes, *caractérisé en ce que* l'angle d'ouverture ($\alpha$) du miroir à cône intérieur (22) se situe dans l'ordre de grandeur de 45°.

6. Dispositif selon l'une quelconque des revendications précédentes, *caractérisé en ce que* plusieurs miroirs à cône intérieur (22) sont alignés l'un à côté de l'autre de sorte que leurs surfaces de miroir (24) sont détournées l'une de l'autre en alternance.

7. Dispositif selon l'une quelconque des revendications précédentes, *caractérisé en ce que* les éléments d'émission et le miroir à cône intérieur (22) sont montés dans un boîtier (32) pouvant être déplacé en continu sur l'objet à contrôler (20), dont le fond (34) possède sous le miroir à cône intérieur (22) une fente en forme de cercle primitif (36) en tant qu'ouverture pour le faisceau (26) parallèle tombant sur l'objet à contrôler (20).

8. Dispositif selon la revendication 7, *caractérisé en ce qu'*une source lumineuse (38) est montée sur le boîtier (32) dans la zone de la fente (36).

9. Dispositif selon l'une quelconque des revendications précédentes, *caractérisé en ce qu'*un système de source lumineuse de géométrie identique avec miroirs à cône intérieur (22) de même conception est attribué à chaque capteur linéaire (14) avec miroir à cône intérieur (22) attribué, pour lequel une source lumineuse ponctuelle (46) correspond à chaque capteur linéaire (14).

10. Dispositif selon la revendication 9, *caractérisé en ce que* les capteurs linéaires (14) et les sources lumineuses ponctuelles (46) peuvent être déplacés de façon synchrone dans des plans parallèles l'un à l'autre, séparés par une plaque (54) transparente ou translucide.

11. Dispositif selon l'une quelconque des revendications précédentes, *caractérisé en ce que* les éléments optiques sont des sources lumineuses ponctuelles (46) pour générer un éventail de faisceau (48), lesquelles sont opposées dans un miroir à cône intérieur (22) correspondant dans la trajectoire de faisceau pour générer un rideau de lumière parallèle (50), qui projette l'objet à contrôler (20) en projection sur une plaque (54) transparente ou translucide recevant l'objet à contrôler (20), un appareil photo étant disposé pour la saisie de celui-ci sur la plaque (54).

Fig. 1

Fig. 2

Fig. 3

Fig. 4

Fig·5

Fig·6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3534019 C2
- DE 102006008552 A1
- EP 63761 A1
- US 2009284754 A1
- US 20040212797 A1